# EUROPEAN PATENT SPECIFICATION

(11) **EP 0 644 825 B1**
(45) Date of publication and mention of the grant of the patent: **16.07.1997**
(21) Application number: 93913929.1
(22) Date of filing: 14.05.1993
(51) Int. Cl.: B29C 53/50

(54) **VACUUM ADVANCE SYSTEM FOR HIGH SPEED CONTACT SEALER FOR FORMING A FLAT FILM INTO A TUBE**
VAKUUMSYSTEM FÜR HOCHGESCHWINDIGKEITSKONTAKTSCHWEISSGERÄT ZUM HERSTELLEN EINES ROHRES AUS EINER FLACHFOLIE
SYSTEME D'AVANCE SOUS VIDE POUR DISPOSITIF DE SCELLEMENT A VITESSE ELEVEE SERVANT A FABRIQUER UN TUBE A PARTIR D'UN FILM PLAT

(30) Priority: 15.05.1992 US 883662
(43) Date of publication of application: 29.03.1995
(73) Proprietor: DELAWARE CAPITAL FORMATION INC., Wilmington, DE 19803 (US)
(72) Inventor: CHEN, Kuo-Raid, Grant, Cary, NC 27513 (US); MISNER, Raymond, H., Raleigh, NC 27603 (US); WINDHAM, Elbert P., Fuguay-Varina, NC 27526 (US); RICHARDSON, Bernard D., Apex, NC 27502 (US)
(74) Representative: Leale, Robin George
(86) International application number: US9304659
(87) International publication number: WO9323234

(56) References cited:
- AT-A- 386 997
- US-A- 5 085 036
- PATENT ABSTRACTS OF JAPAN vol. 10, no. 40 (M-454)(2097) 18 February 1986 & JP,A,60 191 901 (KIYOUTO SEISAKUSHO K.K.) 30 September 1985 see abstract

## Description

This invention relates to an improved mechanism for transporting flexible film which is formed from a flat sheet into a tubular form. More specifically, the invention relates to the apparatus for transporting the formed tube of film when the edges of the tube are overlapped and are being sealed by a heating mechanism for example.

In US-A-5,085,036, there is disclosed a mechanism which is used to form a flat sheet of flexible film into a tubular shape and for transporting that tubular shape along a cylindrical tube as the overlapping edges of the film are sealed or adhered one to the other. The mechanism is especially useful in the food packaging industry wherein the tubular flexible film, upon being formed and sealed, is filled with a food product in a continuous operation. Other package making machines are described in US-A-4,043,098 and US-A-4,974,396.

From US-A-5,085,036, it is known to provide apparatus for the manufacture of a length of closed, film product from a length of a flexible, flat film comprising, in combination:
(a) a support frame;
(b) a film forming collar having an inlet side for receipt of a length of flat, flexible film and for folding the film into a tubular shape with opposite elongate edges of the film overlapping, said collar also having a discharge end;
(c) a tubular member supported by the frame for receiving the tubular shaped film with overlapping edges from the discharge end of the collar;
(d) means for adhering the overlapping elongate edges positioned along the tubular member by engaging the seam defined by the overlapping edges as the film traverses the tubular member; and
(e) a transport means for transporting the tubular film along the tubular member, said transport means including at least one continuously moving means in opposed relation to the tubular member and moveable along a length of the member to thereby attach to the film and transport the film coincident with operation of the means for adhering, said moving means comprising rollers and an endless belt, said endless belt being fitted over the rollers and positioned in opposed relation to the pathway of the film along the tubular member.

In US-A-5,085,036, the formed film is transported along a tubular mandrel by means of an endless belt or endless series of belts which frictionally engage the film and transport it along the tubular member as another endless belt which is heated, heat seals the overlapping edges of the film. The described apparatus is extremely useful and can operate at very high speeds. However, even higher speeds are often necessary in the food packaging fields. Thus, there has remained the need to develop a system for transporting the film which has been formed into the shape of a tube rapidly.

According to the present invention, the apparatus for the manufacture of a length of closed, film product from a length of flexible, flat film is characterised in that the transport means is a vacuum transport means and the at least one continuous moving means is a continuous moving suction means, the suction means comprising a suction manifold extending along the tubular member, the rollers being positioned at the opposite ends of the manifold, and the endless belt having a series of spaced apertures therethrough and being slidable over the manifold, the belt being positioned between the manifold and the tubular member, and the manifold having a vacuum passage in communication therewith, and in that one of the rollers defines a drive sprocket which engages the said apertures of the belt in sequential order as the belt passes over the drive sprocket to thereby drive the belt along the manifold while vacuum is effected through said apertures opposed to the manifold to simultaneously hold the film against the belt whereby the film is transported along the tubular member.

The frame supports a film forming collar designed to fold the film into a tubular shape with opposite elongate edges of the film overlapping one another, and a tubular member onto which the film is guided. The tubular member preferably includes an elongated rib extending along the length thereof in the direction of film travel and aligned to support the overlapping edges. In a preferred embodiment, the means for adhering the overlapping elongate edges comprise a heated, endless band which engages the film as it slides over the described rib.

Vacuum transport means comprising at least one continuous moving suction means are also supported on the frame and are mounted parallel to the tubular member. The vacuum transport means are designed to grip the film as it is discharged from the forming collar and to transport that film along the generally cylindrical tubular member. Preferably a first vacuum assembly is positioned on one side of the rib and a second vacuum assembly is positioned on the opposite side of the rib so that the formed tubular film may be uniformly and easily transported. Thus, the vacuum transport means are preferably separated by approximately 180 degrees about the circumference of the tubular member.

In the most preferred embodiment, the vacuum transport means comprise an endless belt with apertures therethrough. The apertures slide over a manifold and, in particular, manifold passages which are connected to a source of vacuum. The film is thus gripped effectively by the endless belt which attaches itself to the film by virtue of the vacuum and transports the film as the belt moves synchronously with the means for adhering the overlapping edges defining the seam of the formed film tube.

A preferred embodiment of the present invention will now be described by way of example only and with reference to the accompanying drawings, in which:
FIGURE 1 is a perspective view illustrating a preferred embodiment of the present invention; and
FIGURE 2 is a cross-sectional view illustrating the manner of operation of the manifold block and endless belt which provide a vacuum transport of the tubular film product in the preferred embodiment.

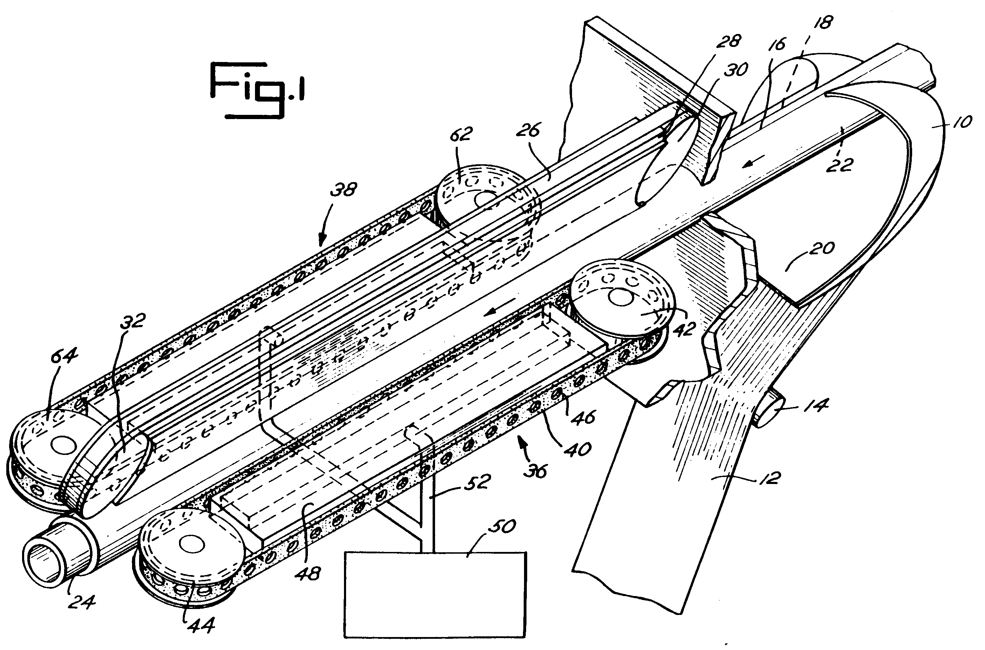

Referring to the figures and in particular Figure 1, there is illustrated a preferred embodiment of the apparatus of the present invention, which is a variation of the apparatus depicted in US-A-5,085,036. Thus, as in US-A-5,085,036, the assembly is mounted on a frame which supports a film forming collar 10. A flexible sheet of film 12 is provided from a roll and is guided by various adjustable rollers 14, for example, over the film forming collar 10. The film 12 then is formed from the flat sheet into a tubular shape with edges 16 and 18 of the film which extend in the elongate direction overlapping one another. The film 12 thus enters an inlet side 20 of the collar 10 and is discharged at an outlet side 22 where it fits over an elongate tube 24. The assembly is, of course, supported on a frame.

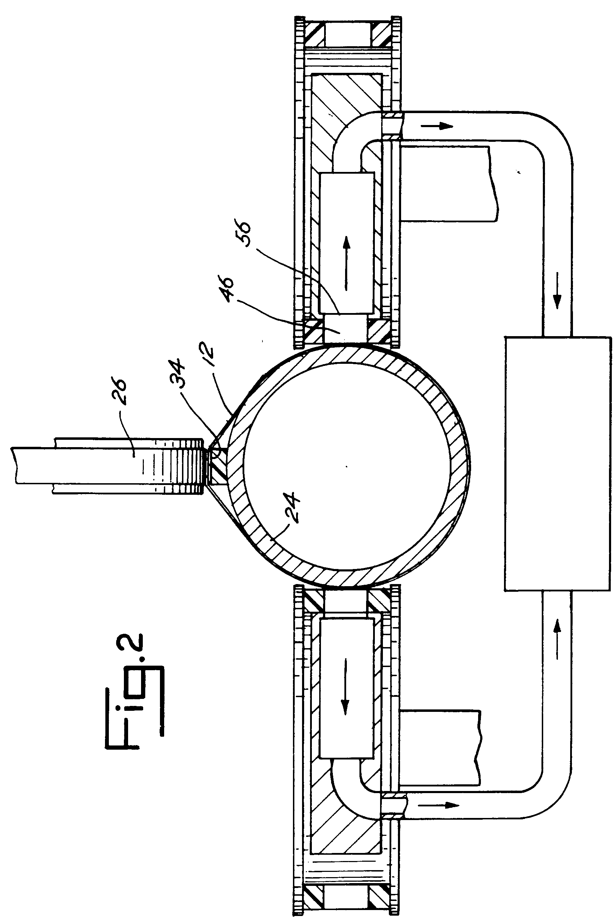

The formed film 12, in the tubular shape, passes over the cylinder or tube 24, and the overlapping edges 16 and 18, which define a seam, are engaged by a heated endless band 26 which passes over a heater bar 28 and rollers 30 and 32 at each end thereof. The band 26 is impinged directly against the seam defined by the overlapping edges 16 and 18 shown in Figure 2. The heater bar 28 thus effects sealing of the seam. Other means such as an adhesive applicator and roller or other means may be utilized to effect sealing of the overlapping edges 16 and 18.

Note, as shown in Figure 2, that the tubular member 24 may include a generally planar elongate rib 34 which extends along the length of the tube 24 and defines a platform upon which the overlapping edges 16 and 18 of the film 12 will ride. The heated band 26 thus impinges against the rib 34 with the overlapping edges 16 and 18 therebetween to more efficiently effect a heat seal. The rib 34 may be made from a polytetrachloroethylene material or some other similar material to enhance the sealing operation. Preferably the rib 34 has a flat surface which cooperates with the flat surface associated with the band 26 to further enhance the sealing operation. The heated band 26 engages the overlapping edges 16 and 18 upstream from the transport apparatus which is described in more detail below.

Positioned on opposite sides of the tube 24, approximately 180 degrees from each other and 90 degrees from the heated band 26 are vacuum advance mechanisms 36,38. The vacuum advance mechanism 36 is positioned on one side of the tube 26 and is substantially identical in function and operation to the vacuum advance system 38 on the opposite side of the tube 24. Vacuum advance mechanism 36 includes an endless flexible belt 40 which fits over end spools or rollers 42 and 44 mounted on a frame or support. One of the rollers 42 or 44 is a driven roller and includes sprocket teeth which fit through spaced apertures 46 in the endless flexible belt 40.

A manifold block 48 is positioned and supported on the frame intermediate the spools 42 and 44. A vacuum source 50 connects via a line 52 with an internal vacuum chamber 54 associated with the manifold block 48. The vacuum chamber 54 includes an elongate slot 56 in the block 48. The slot 56 is in opposed relation to the apertures 46, which pass over the chamber 54 and provide for a passageway to the chamber 54. The apertures 46 thus define vacuum passages which are in opposed relation to film 12, which slides over the tube or tubular member 24. As shown in Figure 2, the passages 46 thus cause the film 12 to effectively be gripped by or adhere to the belt 40 and to be moved or transported by movement of the belt 40 on the rollers 42 and 44. Importantly the rollers 42,44 associated with the transport assembly 36 are synchronized with rollers 62 and 64 associated with the transport assembly 38. Further, the heated band 26 is synchronized with the transport assemblies 36 and 38 so that the band 26 and belts 40 all move at substantially the same speed. In this manner, the transport assemblies 36 and 38 move to transport the film 12 over the tubular member 24. The band 26 moves to effect the sealing operation of the overlapped edges 16 and 18.

The transport assemblies 36 and 38 provide for engagement of the film 12 downstream from engagement of the band 26 with the overlapping edges 16 and 18. This is the preferred arrangement; however, the invention contemplates that the heated band 26 may engage the overlapped edges 16 and 18 at the same time as the vacuum manifold transport assemblies 36, 38, prior thereto or subsequent thereto.

With the construction of the preferred embodiment of the invention, as depicted in the drawings and as described, the speed of movement of the film over the tubular member 24 may be significantly increased and the output of the apparatus may thus be significantly increased compared, for example, to the construction depicted in US-A-5,085,636. Additionally with the construction of the preferred embodiment, it is possible to shorten the length or run associated with the assemblies 36 and 38 as well as the run associated with the heater band 26. Further, the heater band 26 may be operated at a higher temperature since the duration of the band 26 in contact with the overlapping edges 16 and 18 is shortened. With the preferred apparatus of the invention, therefore, a fewer number of parts having a smaller configuration is possible relative to the prior art construction. Further, with preferred embodiments of the present invention it is possible to adjust the vacuum derived from the vacuum source 50 and thereby adjust and accommodate various types of flexible film material moving at various speeds and having various overlapping configurations. Because there is no frictional engagement of the endless belt 40, the likelihood of a tear in the formed tubular material is greatly reduced. The improved construction in accordance with preferred embodiments of the present invention therefore enables the manufacture of an improved product having a higher degree of manufacturing acceptance. Rejected tubular material is less likely with the preferred construction of the invention.

Thus in at least the illustrated embodiment of the present invention there is provided an improved apparatus for high speed formation of a flat, flexible film into a tubular form; further there is provided a mechanism for transport of the formed tubular film more quickly than prior art mechanisms; further there is provided an improved vacuum transport means which easily adheres and grips the formed film and transports the formed film in a manner which tends to preserve the integrity of the formed film; and furthermore, there is provided an improved apparatus for the manufacture of a length of closed film product from a length of flexible, flat film which is economical, easy to manufacture and repair, and which has a high degree of efficiency with respect to manufacture of the closed film product.

## Claims

1. Apparatus for the manufacture of a length of closed, film product from a length of a flexible, flat film comprising, in combination:
(a) a support frame;
(b) a film forming collar (10) having an inlet side (20) for receipt of a length of flat, flexible film (12) and for folding the film into a tubular shape with opposite elongate edges (16,18) of the film overlapping, said collar also having a discharge end (22);
(c) a tubular member (24) supported by the frame for receiving the tubular shaped film (12) with overlapping edges from the discharge end of the collar;
(d) means (26) for adhering the overlapping elongate edges positioned along the tubular member by engaging the seam defined by the overlapping edges as the film traverses the tubular member; and
(e) a transport means (36,38) for transporting the tubular film along the tubular member, said transport means including at least one continuously moving means (46,54,56) in opposed relation to the tubular member and moveable along a length of the member to thereby attach to the film and transport the film coincident with operation of the means for adhering, said moving means comprising rollers (42,44) and an endless belt (40), said endless belt being fitted over the rollers and positioned in opposed relation to the pathway of the film along the tubular member, characterised in that said transport means (36,38) is a vacuum transport means (36,38) and said at least one continuous moving means (46,54,56) is a continuous moving suction means, said suction means comprising a suction manifold (54) extending along the tubular member, said rollers (42,44) being positioned at the opposite ends of the manifold, and said endless belt (40) having a series of spaced apertures (46) therethrough and slidable over the manifold, said belt being positioned between the manifold and the tubular member, and said manifold having a vacuum passage in communication therewith, and in that one of said rollers defines a drive sprocket which engages the said apertures of the belt in sequential order as the belt passes over the drive sprocket to thereby drive the belt along the manifold while vacuum is effected through said apertures opposed to the manifold to simultaneously hold the film against the belt whereby the film is transported along the tubular member.

2. Apparatus as claimed in claim 1, wherein the vacuum transport means (36,38) comprise a first and second transport assemblies on opposite sides of the tubular member (24).

3. Apparatus as claimed in claim 1 or 2, wherein the means for adhering (26) includes heating means positioned in opposed relation to the tubular member (24), and wherein the tubular member includes a longitudinal rib (34) projecting from the tubular member and aligned with the seam and the means for adhering.

4. Apparatus as claimed in any preceding claim, wherein the manifold (54) includes an elongate slot vacuum passage (56) along a partial run of the belt (40) opposed to the tube (24).

5. Apparatus as claimed in any preceding claim, wherein the heating means (26) comprise an endless band synchronized to move substantially simultaneously at the speed of the endless vacuum advance belt (40).

## Patentansprüche

1. Vorrichtung zur Herstellung eines Längenstücks eines geschlossenen Folienprodukts aus einem Längenstück einer flexiblen, flachen Folie, umfassend in Kombination:
(a) einen Stützrahmen;
(b) einen Folienformungskragen (10) mit einer Einführungsseite (20) zur Aufnahme eines Längenstücks einer flachen, flexiblen Folie (12) und zum Falten der Folie zu einer rohrförmigen Gestalt mit einander gegenüberliegenden Längsrändern (16, 18) der sich überlappenden Folie, wobei der Kragen auch ein Abgabeende (22) aufweist;
(c) ein rohrförmiges Element (24), das von dem Rahmen abgestützt ist, zum Aufnehmen der rohrförmig gestalteten Folie (12) mit einander überlappenden Rändern von dem Abgabeende des Kragens aus;
(d) ein Mittel (26) zum Verkleben der einander überlappenden Längsränder, die entlang des rohrförmigen Elements angeordnet sind, durch Erfassen der Naht, die durch die sich überlappenden Ränder gebildet wird, wenn sich die Folie durch das rohrförmige Element hindurch bewegt; und
(e) ein Fördermittel (36, 38) zum Fordern der rohrförmigen Folie entlang des rohrförmigen Elements, wobei das Fördermittel mindestens ein sich fortlaufend bewegendes Mittel (46, 54, 56) in gegenüberliegender Beziehung zu dem rohrförmigen Element aufweist und entlang eines Längenstücks des Elements bewegbar ist, um sich dadurch an der Folie festzuhalten und die Folie gleichzeitig mit der Arbeit des Klebemittels zu fördern, wobei das sich bewegende Mittel Rollen (42, 44) und ein Endlosband (40) umfaßt, wobei das Endlosband über die Rollen geführt ist und in einer gegenüberliegenden Beziehung zu der Bewegungsbahn der Folie entlang des rohrförmigen Elements angeordnet ist, **dadurch gekennzeichnet**, daß das Fördermittel (36, 38), ein Vakuum-Fördermittel (36, 38) ist und daß das mindestens eine fortlaufende Bewegungsmittel (46, 54, 56) ein fortlaufendes Ansaug-Bewegungsmittel ist, wobei das Ansaugmittel einen Saugverteiler (54) umfaßt, der sich entlang des rohrförmigen Elements erstreckt, wobei die Rollen (42, 44) an den gegenüberliegenden Enden des Verteilers angeordnet sind und das Endlosband (40) eine Reihe von beabstandeten Durchgangsöffnungen (46) aufweist, die entlang des Verteilers verschiebbar sind, wobei das Band zwischen dem Verteiler und dem rohrförmigen Element angeordnet ist und der Verteiler einen damit in Verbindung stehenden Vakuumkanal aufweist, und daß eine der Rollen eine Antriebsstiftscheibe bildet, die in die Öffnungen des Bandes in aufeinanderfolgender Reihenfolge eingreift, wenn sich das Band entlang der Antriebsstiftscheibe vorbei bewegt, um dadurch das Band entlang des Verteilers zu bewegen, während ein Vakuum durch die dem Verteiler gegenüberliegenden Öffnungen hindurch zur Einwirkung gebracht wird, um gleichzeitig die Folie gegen das Band zu halten, wodurch die Folie entlang des rohrförmigen Elements gefördert wird.

2. Vorrichtung nach Anspruch 1, wobei das Vakuumfördermittel (36, 38) eine erste und eine zweite Förderbaugruppe an gegenüberliegenden Seiten des rohrförmigen Elements (24) umfaßt.

3. Vorrichtung nach Anspruch 1 oder 2, wobei das Mittel zum Verkleben (26) ein Erwärmungsmittel aufweist, das in gegenüberliegender Beziehung zu dem rohrförmigen Element (24) angeordnet ist, und wobei das rohrförmige Element eine Längsrippe (34) aufweist, die von dem rohrförmigen Element aus vorsteht und mit der Naht und dem Mittel zum Verkleben fluchtet.

4. Vorrichtung nach irgendeinem vorhergehenden Anspruch, wobei der Verteiler (54) einen länglichen Vakuum-Schlitzkanal entlang eines Teiltrums des Bandes (40) aufweist, der dem Rohr (24) gegenüberliegt.

5. Vorrichtung nach irgendeinem vorhergehenden Anspruch, wobei das Erhitzungsmittel (26) ein Endlosband umfaßt, das in Hinblick auf eine im wesentlichen gleichzeitige Bewegung mit der Geschwindigkeit des endlosen Vakuum-Förderbandes (40) synchronisiert ist.

## Revendications

1. Appareil pour la fabrication d'une longueur d'un produit fermé en forme de film à partir d'une longueur d'un film plat flexible comprenant, en combinaison :
a) un cadre formant support ;
b) un collier (10) de formation du film ayant un côté d'entrée (20) pour recevoir une longueur d'un film plat et flexible (12) et pour plier le film dans une forme tubulaire ayant des bords opposés de forme allongée (16, 18) à recouvrement du film, le dit collier ayant également une extrémité de décharge (22) ;
c) un élément de forme tubulaire (24) porté par le cadre pour recevoir le film de forme tubulaire (12) avec des bords à recouvrement à partir de l'extrémité de décharge du collier ;
d) un moyen (26) pour faire adhérer les bords de forme allongée à recouvrement positionnés le long de l'élément de forme tubulaire par engagement de la couture définie par les bords à recouvrement pendant que le film traverse l'élément de forme tubulaire; et
e) un moyen de transport (36, 38) pour transporter le film tubulaire le long de l'élément de forme tubulaire, le dit moyen de transport incluant au moins un moyen de mouvement continu (46, 54, 56) en relation opposée à l'élément de forme tubulaire et mobile sur une longueur de l'élément pour ainsi se fixer au film et pour transporter le film en même temps que le fonctionnement du moyen d'adhésion, le dit moyen de mouvement comprenant des roues (42, 44) et une courroie sans fin (40), la dite courroie sans fin étant disposée sur les roues et étant positionnée à l'opposé du trajet du film le long de l'élément de forme tubulaire,
caractérisé en ce que
le dit moyen de transport (36, 38) est un moyen de transport sous vide (36, 38) et le dit au moins un moyen de mouvement continu (46, 54, 56) est un moyen de succion de mouvement continu, le dit moyen de succion comprenant une tubulure de succion (54) s'étendant le long de l'élément de forme tubulaire, les dites roues (42, 44) étant positionnées aux extrémités opposées de la tubulure, et la dite courroie sans fin (40) présentant une série d'ouvertures espacées (46) la traversant, et coulissant au-dessus de la tubulure, la dite courroie étant positionnée entre la tubulure et l'élément de forme tubulaire, et la dite tubulure ayant un passage sous vide en communication avec elle, et
en ce que une des dites roues détermine un pignon de commande qui est en contact des dites ouvertures de la courroie de façon séquentielle lorsque la courroie passe sur le pignon de commande de manière à ainsi commander la courroie le long de la tubulure, pendant que le vide est mis à travers les dites ouvertures opposées à la tubulure pour porter de façon simultanée le film contre la courroie, de telle manière que le film soit transporté le long de l'élément de forme tubulaire.

2. Appareil selon la revendication 1, dans lequel le moyen de transport sous vide (36, 38) comporte des premier et deuxième ensembles de transport sur des côtés opposés de l'élément de forme tubulaire (24).

3. Appareil selon la revendication 1 ou 2, dans lequel le moyen d'adhésion (26) inclut un moyen de chauffage positionné à l'opposé de l'élément de forme tubulaire (24), et dans lequel l'élément de forme tubulaire comporte une nervure longitudinale (34) faisant saillie de l'élément de forme tubulaire et alignée avec la couture et le moyen d'adhésion.

4. Appareil selon l'une quelconque des revendications précédentes, dans lequel la tubulure (54) présente une fente allongée de passage du vide (56) le long d'une région partielle de la courroie (40) opposée au tube (24).

5. Appareil selon l'une quelconque des revendications précédentes, dans lequel le moyen de chauffage (26) comporte une bande sans fin synchronisée pour se mouvoir de façon substantiellement simultanée à la vitesse de la courroie sans fin d'avance sous vide (40).
